# EUROPÄISCHE PATENTANMELDUNG

(11) **EP 3 626 579 A1**
(43) Veröffentlichungstag der Anmeldung: **25.03.2020**
(21) Anmeldenummer: 19198364.2
(22) Anmeldetag: 19.09.2019
(51) Int. Cl.: B62B 9/12, B62B 5/00

(54) **RAHMENSYSTEM**

(30) Priorität: 20.09.2018 DE 102018123133
(71) Anmelder: Emmaljunga Barnvagnsfabrik AB, 28268 Vittsjö (SE)
(72) Erfinder: Edvardsson, Joakim, 28143 Hässleholm (SE); Persson, Christian, 28268 Vittsjö (SE); Rupp, Bernhard, 75056 Sulzfeld (DE); Martin, Norbert, 77855 Achern (DE)
(74) Vertreter: Müller Schupfner & Partner Patent- und Rechtsanwaltspartnerschaft mbB

(57) **Zusammenfassung**

Betrifft ein Rahmensystem, insbesondere Rahmensystem eines Kinderfortbewegungsfahrzeuges, umfassend einen ersten Rahmenteil (2) und einen zweiten Rahmenteil (4), wobei der erste Rahmenteil und der zweite Rahmenteil über eine Verbindungseinheit (6) miteinander verbunden sind, wobei die Verbindungseinheit ein erstes Verbindungselement (62) aufweist, welches an seinem ersten distalen Ende schwenkbar in einem ersten Verbindungspunkt (22) am ersten Rahmenteil festgelegt ist und an seinem zweiten distalen Ende schwenkbar in einem dritten Schwenkpunkt (42) am zweiten Verbindungsteil festgelegt ist, wobei die Verbindungseinheit ein zweites Verbindungselement (64) aufweist, welches an seinem ersten distalen Ende schwenkbar in einem zweiten Verbindungspunkt (24) am ersten Rahmenteil festgelegt ist und an seinem zweiten distalen Ende schwenkbar in einem vierten Verbindungspunkt (44) am zweiten Rahmenteil festgelegt ist, wobei der Abstand des ersten Verbindungspunkts vom dritten Verbindungspunkt gleich dem Abstand des zweiten Verbindungspunkts vom vierten Verbindungspunkt ist, und wobei der Abstand des ersten Verbindungspunkts vom zweiten Verbindungspunkt kleiner ist als der Abstand des dritten Verbindungspunkts vom vierten Verbindungspunkt ist.

## Beschreibung

Die vorliegende Erfindung betrifft ein Rahmensystem, insbesondere ein Rahmensystem eines Kinderfortbewegungsfahrzeuges.

Rahmensysteme für Kinderfortbewegungsfahrzeuge, wie beispielsweise Kinderwagen, Anhänger, Handwagen, dreirädrige Transportfahrzeuge und ähnliche fahrende Mobiltätssysteme, sind aus dem Stand der Technik bekannt. Weiterhin ist es auch bekannt, dass diese Rahmensysteme gelenkige Anordnungen aufweisen können, welche eine gefederte Bewegung verschiedener Rahmenteile zueinander zulassen. Es hat sich jedoch gezeigt, dass die im Stand der Technik bekannten schwenkbaren Rahmensysteme nicht dafür geeignet sind, eine Antriebsautomatik in den Rahmen aufzunehmen, da ungewollte Schwenkbewegungen am Rahmen auftreten, welche eine fehlerhafte Bestimmung der Lagedaten der Antriebsautomatik im Rahmen verursachen.

Aufgabe der vorliegenden Erfindung ist es, ein Rahmensystem bereitzustellen, welches zum Einsatz mit einer Antriebsautomatik geeignet ist.

Erfindungsgemäß umfasst das Rahmensystem einen ersten Rahmenteil und einen zweiten Rahmenteil, wobei der erste Rahmenteil und der zweite Rahmenteil über eine Verbindungseinheit miteinander verbunden sind, wobei die Verbindungseinheit ein erstes Verbindungselement aufweist, welches an seinem ersten distalen Ende schwenkbar in einem ersten Verbindungspunkt am ersten Rahmenteil festgelegt ist und an seinem zweiten distalen Ende schwenkbar in einem dritten Schwenkpunkt am zweiten Verbindungsteil festgelegt ist, wobei die Verbindungseinheit ein zweites Verbindungselement aufweist, welches an seinem ersten distalen Ende schwenkbar in einem zweiten Verbindungspunkt am ersten Rahmenteil festgelegt ist und an seinem zweiten distalen Ende schwenkbar in einem vierten Verbindungspunkt am zweiten Rahmenteil festgelegt ist, wobei der Abstand des ersten Verbindungspunkts vom dritten Verbindungspunkt gleich dem Abstand des zweiten Verbindungspunkts vom vierten Verbindungspunkt ist und wobei der Abstand des ersten Verbindungspunkts vom zweiten Verbindungspunkt kleiner ist als der Abstand des dritten Verbindungspunkts vom vierten Verbindungspunkt. Das Rahmensystem weist grundsätzlich somit zwei Rahmenteile auf, wobei der erste Rahmenteil relativ zum zweiten Rahmenteil schwenkbar angeordnet ist und wobei die beiden Rahmenteile über eine Verbindungseinheit derart miteinander verbunden sind, dass eine Schwenkbewegung des ersten Rahmenteils relativ zum zweiten Rahmenteil stattfinden kann. Die Verbindungseinheit weist dabei ein erstes Verbindungselement auf, welches vorzugsweise bezogen auf die Anordnung des Rahmens, während dieser sich im Einsatz befindet und auf einer Bodenfläche steht, oben angeordnet ist und ein zweites Verbindungselement, welches entsprechend vorzugsweise unterhalb des ersten Verbindungselements angeordnet ist. Die beiden Verbindungselemente haben vorzugsweise dieselbe Länge und sind jeweils in Verbindungspunkten sowohl am ersten Rahmenteil als auch am zweiten Rahmenteil festgelegt. Die Rahmenteile sind dabei vorzugsweise Bereiche des unteren Rahmengestells eines Kinderfortbewegungsfahrzeuges, besonders bevorzugt eines Kinderwagens, Anhängers, Handwagens oder dreirädrigen Transportgefährts, wobei dieses Kinderfortbewegungsfahrzeuges zum einen Bereiche zur Aufnahme von Transporteinheiten, wie beispielsweise einer Babyschale oder einem Sportsitz, aufweist und zum anderen auch ein Handgriff zum Schieben und Steuern oder eine Kupplung zum Verbinden des Kinderfortbewegungsfahrzeuges mit einem weiteren Fahrzeug, vorzugsweise am zweiten Rahmenteil festgelegt ist. Die Verbindungselemente sind vorzugsweise als stangenartige oder abgeflachte Streben ausgebildet und weisen eine im Wesentlichen gradlinige Erstreckung auf. An einem ersten distalen Ende ist jedes der Verbindungselemente jeweils an dem ersten Rahmenteil schwenkbar festgelegt und an dem jeweiligen zweiten distalen Ende an dem zweiten Rahmenteil. Die schwenkbare Festlegung der Verbindungselemente an den Rahmenteilen erfolgt dabei vorzugsweise mittels Bolzen oder Nieten und besonders bevorzugt Lagerbuchsen, die eine verschleißarme Lagerung der Verbindungselemente erlauben. Mit Vorteil sind im montierten Zustand die Verbindungselemente nicht parallel zueinander angeordnet, sondern schließen einen Winkel ein, welcher größer 0° ist. Entsprechend ist der Abstand des ersten Verbindungspunkts vom zweiten Verbindungspunkt kleiner als der Abstand des dritten Verbindungspunkts vom vierten Verbindungspunkt. Mit anderen Worten sind die beiden am ersten Rahmenteil angeordneten Verbindungspunkte weniger weit voneinander beabstandet als die beiden am dritten Rahmenteil angeordneten Verbindungspunkte. Bevorzugt bezieht sich die hier vorgenommene Beschreibung der Verbindungseinheit dabei auf eine Seite des Rahmensystems für ein Kinderfortbewegungsfahrzeuge, wobei mit Vorteil das Rahmensystem zwei solche Verbindungseinheiten aufweist, eine an der linken Seite des Kinderfortbewegungsfahrzeuges und eine an dessen rechter Seite. Entsprechend sind somit zwei erste Verbindungselemente und zwei zweite Verbindungselemente vorgesehen, welche entsprechend in gleicher Weise zwischen dem ersten und dem zweiten Rahmenteil angeordnet sind. Die Länge und Anordnung der Verbindungselemente sorgt dafür, dass bei einer Verschwenkung des ersten Rahmenteils der zweite Rahmenteil keine Verdrehung bzw. Verschwenkung relativ zum Untergrund, auf welchem ein mit dem Rahmensystem ausgestattetes Kinderfortbewegungsfahrzeuge steht, durchführt. Dies erlaubt es, dass eine am zweiten Rahmenteil festgelegte automatisierte Antriebseinheit, die Lage des Kinderfortbewegungsfahrzeuges und entsprechende Beschleunigungen oder Verzögerungen ungestört vom Einfedervorgang am Rahmen, bei welchem der erste Rahmenteil verschwenkt wird, zu bestimmen.

Mit Vorteil ist der erste Rahmenteil schwenkbar um eine erste Schwenkachse ausgelegt, wobei die Schwenkachse ein Drehlager, in welchem ein erstes Rad am Rahmensystem drehbar gelagert ist, schneidet. Die Schwenkachse ist die Achse, um welche durch die Verbindungseinheit definiert, der erste Rahmenteil relativ zum zweiten Rahmenteil schwenken kann. Dabei ergibt sich die Orientierung der Schwenkachse vorzugsweise aus der Anordnung der Verbindungseinheit zwischen dem ersten und dem zweiten Rahmenteil, während die Anordnung der Schwenkachse relativ zum ersten Rahmenteil durch die Lage eines oder zweier erster Räder, welche am Rahmensystem drehbar gelagert sind, festgelegt ist. Insbesondere liegt die Schwenkachse dabei derart, dass sie ein Drehlager, in welchem ein erstes Rad am Rahmensystem drehbar gelagert ist, mittig schneidet. Für den Fall, dass das erste Rad das Vorderrad des Kinderfortbewegungsfahrzeuges, beispielsweise des Kinderwagens, ist, schneidet die Schwenkachse dieses erste Rad somit mittig in seiner Rotationsachse. Für den Fall, dass das Vorderrad in Geradeausfahrtrichtung eingestellt ist, so ist die Rotationsachse des Vorderrades vorzugsweise kollinear zur Schwenkachse. Üblicherweise ist zumindest ein Räderpaar eines Kinderfortbewegungsfahrzeuges, mit Vorteil die Vorderräder, drehbar um eine vertikale Achse gelagert, um Lenkbewegungen ausführen zu können. Dennoch verbleibt in diesem Fall die Schwenkachse mittig im Drehlager, auch wenn das erste Rad aus der Geradeausfahrtrichtung ausgelenkt ist. Die Erfindung eignet sich auch zum Einsatz in Kinderfortbewegungsfahrzeugen, bei denen das in Fahrtrichtung hintere Rad oder die hinteren Räder lenkbar ausgelegt sind, wobei in diesem Fall der bisher gewählte Begriff Vorderräder als lenkfähige Räder und der Begriff Hinterräder als nicht-lenkende Räder zu verstehen ist. Mit anderen Worten können die ersten Räder in Fahrtrichtung vorn oder hinten am Rahmensystem angeordnet sein und die zweiten Räder entsprechend an der jeweils anderen Seite. In diesem Fall ist der erste Rahmenteil vorzugsweise, in Fahrtrichtung gesehen hinten am Rahmensystem angeordnet und der zweite Rahmenteil vorn.

Weiterhin bevorzugt ist die Schwenkachse mit einer ersten Schwenklänge vom ersten Verbindungspunkt beabstandet und mit einer zweiten Schwenklänge vom zweiten Verbindungspunkt beabstandet, wobei die erste Schwenklänge größer ist als die zweite Schwenklänge. Die erste und die zweite Schwenklänge definieren letztendlich, welche Winkeländerung eine Gerade, welche den ersten und den zweiten Verbindungspunkt schneidet, bei einer Verschwenkung des ersten Rahmenteils durchführt. Dass die erste Schwenklänge dabei größer ist als die zweite Schwenklänge ist ein Ausdruck dafür, dass der erste Verbindungspunkt oberhalb des zweiten Verbindungspunktes angeordnet ist und somit weiter von der Schwenkachse beabstandet ist als der zweite Verbindungspunkt.

Besonders bevorzugt liegt das Verhältnis der zweiten Schwenklänge zur ersten Schwenklänge im Bereich von 0,85 bis 0,998 und bevorzugt bei ca. 0,95 bis 0,99. Innerhalb des maximalen Verhältnisbereiches von 0,85 bis 0,998 hat es sich gezeigt, dass im Rahmen der vorliegenden Erfindung trotzdem ein Ausgleich von Schwenkbewegungen des ersten Rahmenteils mittels der trapezartigen Anordnung der Verbindungselemente zueinander derart stattfinden kann, dass der zweite Rahmenteil rotationsfrei gehalten werden kann. Der besonders bevorzugte Bereich von 0,95 bis 0,99 hat sich dabei insbesondere in Bezug auf ein optimierte Gewicht des Gesamtrahmens als vorteilhaft erwiesen und wird insbesondere bei Rahmensystemen eingesetzt, bei welchen der vordere Rahmenteil eine Länge von 70cm nicht überschreitet.

Weiterhin bevorzugt ist der Mittelwert aus erster und zweiter Schwenklänge ein 4,2- bis 5,2-faches, vorzugsweise ein 4,3- bis 4,7-faches des Abstandes des ersten Verbindungspunktes vom dritten Verbindungspunkt. Mit anderen Worten ist die Länge der Verbindungselemente auf die erste und di e zweite Schwenklänge angepasst. Der Mittelwert der ersten und der zweiten schwenklänge ist somit vorzugsweise die Entfernung eines Punktes, welcher auf einer Verbindungsgeraden zwischen dem ersten und dem zweiten Verbindungspunkt mittig liegt und mit dem Mittelwert der Schwenklänge von der Schwenkachse beabstandet ist. Diese mittlere Schwenklänge ist vorzugsweise ca. 4,2- bis 5,2-mal so lang wie der Abstand der beiden Verbindungspunkte eines Verbindungselements voneinander. Es hat sich gezeigt, dass für dieses Verhältnis ein gutes Zusammenspiel zwischen einer Verschwenkung des ersten Rahmenteils und einer gleichzeitigen Verschwenkung des ersten und des zweiten Verbindungselements bei gleichzeitigem Ausgleich des Winkels zwischen dem ersten und dem zweiten Rahmenteil stattfinden kann. Der besonders bevorzugte Bereich von 4,3 bis 4,7 der mittleren Schwenklänge zum Abstand der beiden Verbindungspunkte an einem Verbindungselement hat sich dabei bevorzugt für Rahmensysteme als geeignet erwiesen, bei welchen das erste Rahmenteil eine Länge von 70 cm nicht überschreitet.

Weiterhin bevorzugt steht der Abstand des ersten Verbindungspunkt vom zweiten Verbindungspunkt in einem Verhältnis von 0,75 bis 0,86, bevorzugt von 0,8 bis 0,82 zum Abstand des dritten Verbindungspunktes vom vierten Verbindungspunkt. Mit anderen Worten sind somit die am ersten Rahmenteil vorgesehenen Verbindungspunkte nur mit einem 0,75- bis 0,86-Fachen des Abstandes der Verbindungspunkte am zweiten Rahmenteil voneinander beabstandet. Dies sorgt für die nicht parallele und trapezartige Ausbildung der Verbindungseinheit und ermöglicht den Ausgleich von Winkelveränderungen bei einer Verschwenkung des ersten Rahmenteils durch die Verbindungseinheit derart, dass der zweite Rahmenteil dabei nicht verschwenkt wird.

Mit Vorteil steht die Differenz zwischen dem Abstand des dritten Verbindungspunktes vom vierten Verbindungspunkt und dem Abstand des ersten Verbindungspunkt vom zweiten Verbindungspunkt in einem Verhältnis von 0,05 bis 0,07 und bevorzugt von 0,055 bis 0,06 zum Abstand des ersten Verbindungspunkts vom dritten Verbindungspunkt. Mit anderen Worten ist somit die Differenz zwischen dem Abstand der Verbindungspunkte am zweiten Rahmenteil und der Verbindungspunkte am ersten Rahmenteil in einem Verhältnis von 0,05 bis 0,07 zur Länge der Verbindungselemente bzw. zum Abstand der Verbindungspunkte an einem Verbindungselement ausgelegt. Auch dieses Verhältnis hat sich für Rahmensysteme zum Einsatz in Kinderfortbewegungsfahrzeugen, insbesondere Kinderwagen, als günstig für die Erreichung einer schwenkfreien Aufhängung des zweiten Rahmenteils erwiesen. Der engste Verhältnisbereich von 0,055 bis 0,06 hat sich dabei insbesondere für Rahmensysteme als vorteilhaft erwiesen, bei welchen der erste Rahmenteil eine Gesamtlänge von 70 cm nicht überschreitet.

Mit Vorteil weist der zweite Rahmenteil eine Aufnahme für ein zweites Rad des Rahmensystems auf, wobei die Aufnahme einen Antrieb für das zweite Rad aufweist. Am zweiten Rahmenteil ist somit vorzugsweise eine Aufnahmegeometrie, insbesondere eine Aussparung und/oder ein entsprechendes Lagerauge vorgesehen, in welcher sowohl ein Antrieb, als auch eine achsstummelartige Anordnung zur drehbaren Lagerung eines zweiten Rades vorgesehen ist. Besonders bevorzugt weist der zweite Rahmenteil hierfür eine verdickte Geometrie auf, innerhalb welcher eine speziell zur Unterbringung eines Elektroantriebes und dessen Regelungseinheit mit Bewegungssensorik ausgebildete Aussparung vorgesehen ist. Weiterhin bevorzugt weist der zweite Rahmenteil einen entsprechenden flanschartigen Abschnitt auf, an welchem der dritte und der vierte Verbindungspunkt angeordnet sind.

Weiterhin bevorzugt sind am ersten Rahmenteil zwei erste Räder angeordnet und die Schwenkachse schneidet die Drehlager der ersten Räder mittig, wobei am zweiten Rahmenteil zwei zweite Räder drehbar gelagert sind und durch je einen Antrieb mit einem Drehmoment beaufschlagbar sind. Mit Vorteil ist das Rahmensystem also zur Aufnahme und drehbaren Lagerung von vier Rädern, davon zwei erste Räder, vorzugsweise an der vorderen Seite des Rahmensystems und zwei zweite Räder, vorzugsweise an der Hinterseite des Rahmensystems, ausgelegt. Die hinteren Räder des Rahmensystems sind dabei mit Vorteil angetriebene Räder, wobei der zweite Rahmenteil, um eine reibungslose Funktion der Lagererkennung des Antriebssystemes zu erleichtern, derart im Rahmensystem gelagert ist, dass er keine Rotationsbewegung durchführt, wenn das Rahmensystem einfedert oder ausfedert. Es wird somit der zweite Rahmen nur dann verschwenkt, wenn eine Veränderung des Untergrundes auf dem das mit dem Rahmensystem ausgestattete Kinderfortbewegungsfahrzeuges abrollt, stattfindet. Eine gefederte Bewegung des ersten Rahmenteils, verursacht beispielsweise durch ein sich bewegendes Kind in einem Kinderwagen, verursacht keine schwenkende oder rotierende Lageänderung des zweiten Rahmenteils, so dass dieser gemeinsam mit den in ihm angeordneten Antriebssystemen in einer unveränderten Orientierung relativ zum Untergrund, auf dem das mit dem Rahmensystem ausgestattete Kinderfortbewegungsfahrzeug fährt, gehalten ist. Die ersten Räder des Rahmensystems sind dabei vorzugsweise um vertikale Achsen schwenkbar ausgelegt, wobei die Schwenkachse die Drehlager beider Räder jeweils mittig schneidet.

Weiterhin bevorzugt weist der erste Rahmenteil einen Träger auf, wobei in einem unbelasteten Zustand des Rahmensystems die Haupterstreckungsrichtung des Trägers im Wesentlichen parallel zur Aufstandsfläche der Räder ausgerichtet ist. Der Träger des Rahmenteils ist dabei vorzugsweise eine balkenartige, sich länglich oder im Wesentlichen innerhalb einer Ebene erstreckende Geometrie des ersten Rahmenteils, welche an ihrem ersten Ende vorzugsweise in dem Verbindungsbereich mit der Verbindungseinheit mündet und an ihrem zweiten, dem ersten Ende gegenüberliegenden Ende, jeweils für die Lagerung der ersten Räder des Rahmensystems ausgelegt ist. In einem unbelasteten Zustand des Rahmensystems, bei welchem also keine Nutzlast vom Rahmensystem aufgenommen werden muss und entsprechend die Einfederung ihren Minimalwert aufweist, ist dieser Träger im Wesentlichen parallel zur Aufstandsfläche der Räder ausgerichtet. "Im Wesentlichen parallel" heißt im vorliegenden Fall, dass eine Ausrichtung des Trägers im unbelasteten Zustand des Rahmensystems mit einem Winkel von 1° bis 4° im Rahmen der vorliegenden Erfindung trotzdem als parallel zur Aufstandsfläche gewertet wird. Der unbelastete Zustand des Rahmensystems ist der Zustand, in welchem der erste Rahmenteil ausgefedert angeordnet ist. Die parallele Ausrichtung des Trägers des ersten Rahmenteils erlaubt es dabei auf einfache Weise, verschiedene Nutzlasttransportvorrichtungen für ein und dasselbe Rahmensystem zu verwenden.

Bevorzugt ist der erste Rahmenteil um maximal 2,5° bis 4° um die Schwenkachse (S) schwenkbar, um von einem unbelasteten Zustand in einen maximal belasteten Zustand zu gelangen. Der maximal belastete Zustand ist dabei der Zustand, bei welchem die maximale Verschwenkbewegung des ersten Rahmenteils relativ zum zweiten Rahmenteil stattgefunden hat. Der maximal belastete Zustand ist mit anderen Worten der maximal eingefederte Zustand des Rahmensystems. Dieser maximal belastete Zustand ist dabei vorzugsweise durch die entsprechenden Rückstellelemente begrenzt, so dass ab einem bestimmten Grenzgewicht, welches vom Rahmensystem zu tragen ist, die maximale Auslenkung des ersten Rahmenteils nicht weiter steigt. Auf diese Weise kann gewährleistet werden, dass der Schwenkbewegungsausgleich zwischen dem ersten Rahmenteil und dem zweiten Rahmenteil durch die Verbindungseinheit für den gesamten zulässigen Bereich funktioniert und somit eine rotationsfreie Lagerung der an dem zweiten Rahmenteil angeordneten Antriebssysteme gewährleistet ist.

Weiterhin bevorzugt weist der erste Rahmenteil zumindest einen Aufnahmeflansch zur Festlegung eines Rückstell- und/oder Dämpfmittels auf. Der Aufnahmeflansch ist dabei vorzugsweise in der Nähe der ersten und zweiten Verbindung angeordnet, da auf diese Weise die die Schwenkbewegung begrenzende Kraft durch das Rückstell- und/oder Dämpfmittel mit maximalem Hebelarm bezogen auf die Schwenkachse in den ersten Rahmenteil eingeleitet werden kann.

Weitere Vorteile und Merkmale der vorliegenden Erfindung ergeben sich aus der nachfolgenden Beschreibung mit Bezug auf die beigefügten Figuren. Es versteht sich, dass einzelne Merkmale, welche nur in einer der Figuren dargestellt oder mit einem Bezugszeichen versehen sind, auch jeweils in Ausführungsformen in anderen Figuren zum Einsatz gelangen sollen, sofern dies nicht explizit ausgeschlossen wurde oder sich aufgrund technischer Gegebenheiten verbietet. Es zeigen:
- Fig. 1: eine Seitenansicht einer bevorzugten Ausführungsform des Rahmensystems,
- Fig. 2: eine weitere Seitenansicht des Rahmensystems von Fig. 1 im maximal belasteten Zustand, und
- Fig. 3: eine weitere bevorzugte Ausführungsform, insbesondere mit Fokus auf die Verbindungseinheit 6.

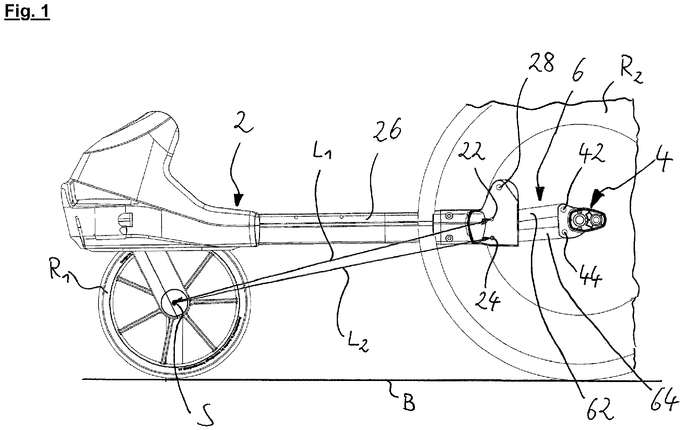

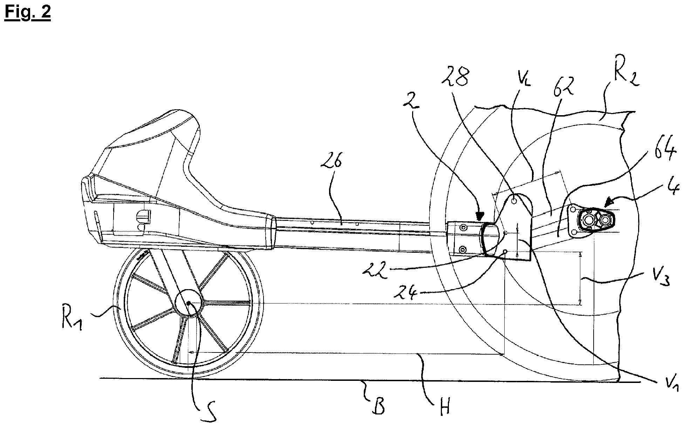

Fig. 1 zeigt ein Rahmensystem gemäß der vorliegenden Erfindung im unbelasteten Zustand. Das Rahmensystem weist einen ersten Rahmenteil 2 und einen zweiten Rahmenteil 4 auf, wobei zwischen dem ersten und dem zweiten Rahmenteil 2, 4 eine Verbindungseinheit 6 angeordnet ist und eine schwenkbare Verlagerung des ersten Rahmenteils 2 relativ zum zweiten Rahmenteil 4 erlaubt. Das Rahmensystem ist bei der gezeigten, bevorzugten Ausführungsform eine Hauptkomponente eines Kinderfortbewegungsfahrzeuges , insbesondere eines Kinderwagens, welcher in Fig. 1 schematisch angedeutet ist. Hierfür weist das Rahmensystem eine Lagerungsmöglichkeit für ein erstes Rad R₁ und ein zweites Rad R₂ auf, wobei die Räder R₁ und R₂ auf einer Aufstandsfläche stehen, welche mit dem Bezugszeichen B gekennzeichnet ist. In der in Fig. 1 dargestellten unbelasteten Stellung weist der erste Rahmenteil 2 einen Träger 26 auf, welcher im Wesentlichen horizontal zur Aufstandsfläche B orientiert ist. Mit anderen Worten verläuft die Haupterstreckungsrichtung des Trägers 26 mit Vorteil parallel oder im Wesentlichen parallel zur Aufstandsfläche B. Das Drehlager des ersten Rades R₁ schneidend ist eine Schwenkachse S vorgesehen, wobei um diese Schwenkachse S die Schwenkbewegung des ersten Rahmenteils 2 stattfinden kann. Der erste Rahmenteil 2 weist einen ersten Verbindungspunkt 22 und einen zweiten Verbindungspunkt 24 auf, wobei im ersten Verbindungspunkt 22 ein erstes Verbindungselement 62 festgelegt ist und im zweiten Verbindungspunkt 24 ein zweites Verbindungselement 64. Der erste Verbindungspunkt 22 ist dabei mit einer ersten Schwenklänge L₁ von der Schwenkachse S beabstandet, während der zweite Verbindungspunkt 24 mit einer zweiten Schwenklänge L₂ von der Schwenkachse S beabstandet ist. Die erste Schwenklänge L₁ ist dabei größer als die zweite Schwenklänge L₂. An ihren dem ersten Rahmenteil 2 abgewandten Enden sind die Verbindungselemente 62, 64 jeweils am zweiten Rahmenteil 4 schwenkbar festgelegt. Hierfür weist der zweite Rahmenteil 4 einen dritten Verbindungspunkt 42 zur schwenkbaren Festlegung des ersten Verbindungselements 62 und einen vierten Verbindungspunkt 44 zur schwenkbaren Festlegung des zweiten Verbindungselements 64 auf. Die Verbindungspunkte 22, 24, 42, 44 spannen dabei, von der Seite gesehen, ein Trapez auf. Dabei ist insbesondere die Gerade zwischen dem ersten Verbindungspunkt 22 und dem dritten Verbindungspunkt 42 nicht parallel zur Geraden, welche durch den zweiten Verbindungspunkt 24 und den vierten Verbindungspunkt 44 verläuft, ausgerichtet. Diese nicht parallele Ausrichtung der Verbindungsgeraden zwischen den Verbindungspunkten und somit auch des ersten Verbindungselements 62 und des zweiten Verbindungselements 64 erlaubt eine ausgleichende Schwenkbewegung durch die Verbindungseinheit 6, wenn der erste Rahmenteil 2 in die in Fig. 2 dargestellte maximal belastete und ausgelenkte Stellung geschwenkt wird. Die Verbindungselemente 62, 64 sind dabei mit Vorteil identisch ausgebildet, weisen also dieselbe Länge auf und insbesondere auch denselben Abstand der jeweiligen an einem Verbindungselement 62, 64 vorgesehenen Verbindungspunkte.

Fig. 2 zeigt die in Fig. 1 dargestellte bevorzugte Ausführungsform des Rahmensystems im maximal belasteten und somit maximal eingefederten Zustand. Dabei sind in Fig. 2 einige Bemaßungen hinzugefügt, welche in Fig. 1 zwar ebenfalls vorhanden sind, aber aus Gründen der Übersichtlichkeit noch nicht dargestellt waren. Gezeigt ist, dass der Träger 26 im Vergleich zu der in Fig. 1 dargestellten Ausführungsform im Uhrzeigersinn um die Schwenkachse S verschwenkt wurde, während der zweite Rahmenteil 4 unverändert im Vergleich zu dem in Fig. 1 dargestellten Zustand geblieben ist. Hierfür muss die Verbindungseinheit 6 eine ausgleichende Schwenk- und Verlagerungsbewegung ausführen, welche dafür sorgt, dass trotz der Verschwenkung des ersten Rahmenteils 2 der zweite Rahmenteil 4 bezogen auf die Aufstandsfläche B in derselben Winkellage bleibt. Mit Vorteil wird die den ersten Rahmenteil 2 auslenkende Kraft über den Träger 26 eingeleitet, wobei am Aufnahmeflansch 28 ein Federelement bzw. eine Kombination eines Feder- und eines Dämpfelements festgelegt ist, um den ersten Rahmenteil 2 wieder in die unbelastete Stellung zurück zu schwenken. Gezeigt ist weiterhin, dass der erste und der zweite Verbindungspunkt 22, 24 mit einem Abstand V₁ in vertikaler Richtung voneinander beabstandet sind, wobei die beiden Verbindungspunkte 22, 24 jeweils mit einem horizontalen Versatz H von der Schwenkachse parallel zur Aufstandsfläche B versetzt angeordnet sind. Diese Maße sind somit Alternativen zu den in Fig. 1 dargestellten Schwenklängen S₁ und S₂ und ein Ausdruck für die geometrische Gestaltung des ersten Rahmenteils 2. Weiterhin ist gezeigt, dass die Verbindungselemente 62, 64 jeweils Verbindungspunkte 22 und 42 sowie 24 und 44 aufweisen, welche mit einer Verbindungslänge V_{L} voneinander beabstandet sind. Dabei ist die Verbindungslänge V_{L} vorzugsweise im Bereich von 10 bis 12 cm bei der in Fig. 1 und 2 dargestellten Ausführungsform vorgesehen. Weiterhin ist in dieser Ausführungsform der horizontale Versatz H ca. 45-50 cm, wobei die Gesamtlänge des ersten Rahmenteiles, insbesondere die horizontale Erstreckung des ersten Rahmenteils 2, eine Länge von 70 cm nicht überschreitet. Weiterhin ist der vertikale Versatz V₃ des unteren der beiden Verbindungspunkte am ersten Rahmenteil 2 zur Schwenkachse S gekennzeichnet, wobei dieser in dem in Fig. 2 dargestellte Zustand des Rahmensystems verständlicherweise kleiner ist als in dem in Fig. 1 dargestellten Zustand. Mit Vorteil beträgt die Änderung des vertikalen Versatzes V₃ im Einsatz des Rahmensystems ca. 2 bis maximal 5 cm, was bei einer mittleren Schwenklänge aus der ersten Schwenklänge L₁ und der zweiten Schwenklänge L₂ von ca. 48 bis 50 cm einen Schwenkwinkel für den ersten Rahmenteil 2 von ca. 2° bis 3,5° ergibt.

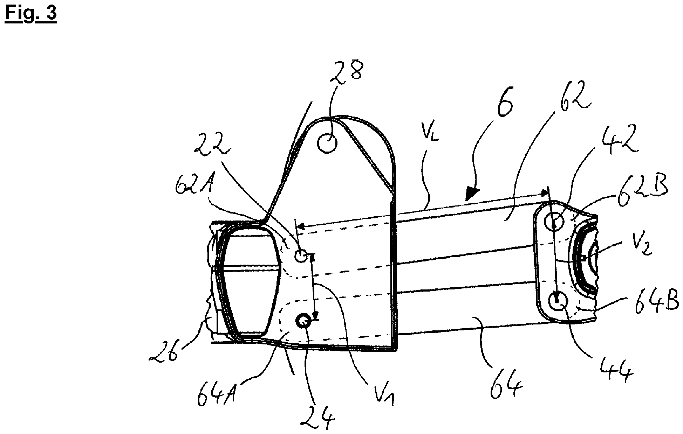

Fig. 3 schließlich zeigt eine Detailansicht des Bereiches des Rahmensystems, in welchem die Verbindungseinheit 6 gezeigt ist, um weitere geometrische Eigenschaften des Rahmensystems zu erläutern. Gezeigt ist insbesondere die Gestaltung des ersten Verbindungselements 62 und des zweiten Verbindungselements 64, wobei die gestrichelten Bereiche durch die jeweiligen Flächen am ersten Rahmenteil 2 und am zweiten Rahmenteil 4 verdeckt sind. Die Verbindungslänge V_{L} ist somit der Abstand der jeweiligen an einem der Verbindungselemente 62 oder 64 vorgesehenen Verbindungspunkte 22 und 42 oder 24 und 44 und ist an beiden Verbindungselementen 62, 64 gleich. Weiterhin ist gezeigt, dass der vertikale Abstand V₁ des ersten Verbindungspunktes 22 vom zweiten Verbindungspunkt 24 kleiner ist, als der Abstand V₂ vom dritten Verbindungspunkt 42 vom vierten Verbindungspunkt 44. Weiterhin gezeigt sind das erste distale Ende 62A des ersten Verbindungselements 62 und dessen zweites distales Ende 62B. Außerdem ist das erste distale Ende 64A und das distale Ende 64B des zweiten Verbindungselements 64 gezeigt, wobei die distalen Enden 62A, 62B, 64A, 64B vorzugsweise gerundet ausgeführt sind, um eine Schwenkbewegung zu erlauben, ohne dass die Gefahr von Anstoßen am ersten Rahmenteil 2 oder zweiten Rahmenteil 4 besteht.

### Bezugszeichen:

- 2: - erster Rahmenteil
- 4: - zweiter Rahmenteil
- 6: - Verbindungseinheit
- 22: - erster Verbindungspunkt
- 24: - zweiter Verbindungspukt
- 26: - Träger
- 28: - Aufnahmeflansch
- 42: - dritter Verbindungspunkt
- 44: - vierter Verbindungspunkt
- 62: - erstes Verbindungselement
- 62A: - erstes distales Ende
- 62B: - zweites distales Ende
- 64: - zweites Verbindungselement
- 64A: - erstes distales Ende
- 64B: - zweites distales Ende
- B: - Aufstandsfläche
- H: - horizontaler Versatz
- L₁: - erste Schwenklänge
- L₂: - zweite Schwenklänge
- R₁: - erstes Rad
- R₂: - zweites Rad
- S: - Schwenkachse
- V₁: - Abstand
- V₂: - Abstand
- V₃: - vertikaler Versatz
- V_{L}: - Verbindungslänge

## Patentansprüche

1. Rahmensystem, insbesondere Rahmensystem eines Kinderfortbewegungsfahrzeuges,
umfassend einen ersten Rahmenteil (2) und einen zweiten Rahmenteil (4), wobei der erste Rahmenteil (2) und der zweite Rahmenteil (4) über eine Verbindungseinheit (6) miteinander verbunden sind,
wobei die Verbindungseinheit (6) ein erstes Verbindungselement (62) aufweist, welches an seinem ersten distalen Ende (62A) schwenkbar in einem ersten Verbindungspunkt (22) am ersten Rahmenteil (2) festgelegt ist und an seinem zweiten distalen Ende (62B) schwenkbar in einem dritten Schwenkpunkt (42) am zweiten Rahmenteil (4) festgelegt ist,
wobei die Verbindungseinheit (6) ein zweites Verbindungselement (64) aufweist, welches an seinem ersten distalen Ende (64A) schwenkbar in einem zweiten Verbindungspunkt (24) am ersten Rahmenteil (2) festgelegt ist und an seinem zweiten distalen Ende (64B) schwenkbar in einem vierten Verbindungspunkt (44) am zweiten Rahmenteil (4) festgelegt ist,
wobei der Abstand des ersten Verbindungspunkts (22) vom dritten Verbindungspunkt (42) gleich dem Abstand des zweiten Verbindungspunkts (24) vom vierten Verbindungspunkt (44) ist, und
wobei der Abstand des ersten Verbindungspunkts (22) vom zweiten Verbindungspunkt (24) kleiner ist als der Abstand des dritten Verbindungspunkts (42) vom vierten Verbindungspunkt (44) ist.

2. Rahmensystem nach Anspruch 1,
wobei der erste Rahmenteil (2) schwenkbar um eine Schwenkachse (S) ausgelegt ist,
wobei die Schwenkachse (S) ein Drehlager, in welchem ein erstes Rad (R₁) am Rahmensystem drehbar gelagert ist, schneidet.

3. Rahmensystem nach Anspruch 2,
wobei die Schwenkachse (S) mit einer ersten Schwenklänge (L₁) vom ersten Verbindungspunkt (22) und mit einer zweiten Schwenklänge (L₂) vom zweiten Verbindungspunkt (24) beabstandet ist,
wobei die erste Schwenklänge (L₁) größer ist als die zweite Schwenklänge (L₂).

4. Rahmensystem nach Anspruch 3,
wobei das Verhältnis der zweiten Schwenklänge (L₂) zur ersten Schwenklänge (L₁) im Bereich von 0,85 bis 0,998 und bevorzugt bei ca. 0,95 bis 0,99 liegt.

5. Rahmensystem nach einem der Ansprüche 3 oder 4,
wobei der Mittelwert aus erster und zweiter Schwenklänge (L₁, L₂) ein 4,2-bis 5,2-faches, vorzugsweise ein ca. 4,3- bis 4,7-faches des Abstandes des ersten Verbindungspunkts (22) vom dritten Verbindungspunkt (42) ist.

6. Rahmensystem nach einem der vorhergehenden Ansprüche,
wobei der Abstand des ersten Verbindungspunkts (22) vom zweiten Verbindungspunkt (24) in einem Verhältnis von 0,75 bis 0,86, bevorzugt von 0,8 bis 0,82 zum Abstand des dritten Verbindungspunkts (42) vom vierten Verbindungspunkt (44) steht.

7. Rahmensystem nach einem der vorhergehenden Ansprüche,
wobei die Differenz zwischen dem Abstand des dritten Verbindungspunkts (42) vom vierten Verbindungspunkt (44) und dem Abstand des ersten Verbindungspunkts (22) vom zweiten Verbindungspunkt (24) in einem Verhältnis von 0,05 bis 0,07 und bevorzugt von ca. 0,055 bis 0,06 zum Abstand des ersten Verbindungspunkts (22) vom dritten Verbindungspunkt (42) steht.

8. Rahmensystem nach einem der vorhergehenden Ansprüche,
wobei der zweite Rahmenteil (4) eine Aufnahme für ein zweites Rad (R₂) des Rahmensystems aufweist,
wobei die Aufnahme einen Antrieb für das zweite Rad (R₂) aufweist.

9. Rahmensystem nach einem der Ansprüche 2 bis 7 und Anspruch 8,
wobei am ersten Rahmenteil (2) zwei erste Räder (R₁) angeordnet sind und die Schwenkachse (S) die Drehlager der ersten Räder (R₁) mittig schneidet,
wobei am zweiten Rahmenteil (4) zwei zweite Räder (R₂) drehbar gelagert und durch je einen Antrieb mit einem Drehmoment beaufschlagbar sind.

10. Rahmensystem nach Anspruch 9 oder nach den Ansprüchen 2 und 8,
wobei der erste Rahmenteil (2) einen Träger (26) aufweist,
wobei in einem unbelasteten Zustand des Rahmensystems die Haupterstreckungsrichtung des Trägers (26) im Wesentlichen parallel zur Aufstandsfläche der Räder (R₁, R₂) ist ausgerichtet ist.

11. Rahmensystem nach einem der vorhergehenden Ansprüche,
wobei der erste Rahmenteil (2) um maximal 2,5° bis 4° um die Schwenkachse (S) schwenkbar ist, um von einem unbelasteten Zustand in einen maximal belasteten Zustand zu gelangen.

12. Rahmensystem nach einem der vorhergehenden Ansprüche,
wobei der erste Rahmenteil (2) zumindest einen Aufnahmeflansch (28) zur Festlegung eines Rückstell- und/oder Dämpfmittels aufweist.
